**Europäisches Patentamt**

**European Patent Office**

**Office européen des brevets**

(19)

(11) Veröffentlichungsnummer: **0 167 819**
**B1**

(12)

# EUROPÄISCHE PATENTSCHRIFT

(45) Veröffentlichungstag der Patentschrift:
**11.05.88**

(21) Anmeldenummer: **85106905.4**

(22) Anmeldetag: **04.06.85**

(51) Int. Cl.⁴: **B 01 D 27/08**

(54) **Filter zum Reinigen von Flüssigkeiten.**

(30) Priorität: **10.07.84 DE 3425347**

(43) Veröffentlichungstag der Anmeldung:
**15.01.86 Patentblatt 86/3**

(45) Bekanntmachung des Hinweises auf die Patenterteilung:
**11.05.88 Patentblatt 88/19**

(84) Benannte Vertragsstaaten:
**DE FR GB IT**

(56) Entgegenhaltungen:
**DE - A - 2 213 874**
**DE - A - 2 547 857**

(73) Patentinhaber: **ROBERT BOSCH GMBH, Postfach 50,
D-7000 Stuttgart 1 (DE)**

(72) Erfinder: **Hogh, Josef, Hainbuchenstrasse 23,
D-7050 Waiblingen (DE)**
Erfinder: **Schacht, Hans, Leharstrasse 12,
D-7000 Stuttgart 1 (DE)**

## Beschreibung

*Stand der Technik*

Die Erfindung geht aus von einem Filter zum Reinigen von Flüssigkeiten nach der im Oberbegriff des Anspruchs 1 näher angegebenen Gattung.

Es ist schon ein solches Filter aus der DE-A-2 213 874 bekannt, dessen zweiteiliges Kunststoffgehäuse aus einem deckelförmigen Gehäuseteil und einem becherförmigen Gehäusetopf besteht, die eine ringförmige Klebestelle miteinander verbindet. Das Gehäuse nimmt einen sternförmigen Filtereinsatz auf, der mit seiner Stirnseite am deckelförmigen Gehäuseteil verklebt ist. Am Gehäuseteil sind durch Unterbrechungen zähneartig hervorstehende Rippen ringförmig angeordnet, welche sowohl den Filtereinsatz am Aussenumfang als auch den Rand des Gehäusetopfes an seinem Innenumfang führen. Beim Zusammenbau des Filters wird die nach oben weisende Innenseite des deckelförmigen Gehäuseteils mit flüssigem Klebstoff begossen, wobei sich zwischen den Rippen hindurch ein einheitlicher Flüssigkeitsspiegel ausbildet, in den sowohl der Filtereinsatz mit seiner Stirnseite als auch der Rand des Gehäusetopfes eingetaucht werden. Diese Art der Verklebung von Gehäuseteilen und Filtereinsatz ist nur begrenzt einsatzfähig und eignet sich dann nicht, wenn als Filtereinsatz ein Wickelfilterelement verwendet wird, das an seiner Stirnseite axial durchströmt wird. Ferner lässt sich die Menge des Klebstoffs hierbei schwer so dosieren, dass vorhandene Hohlräume ausreichend mit Klebstoff gefüllt sind; auch bietet diese Verklebungsart relativ grosse Angriffsflächen für aggressive Medien. Weiterhin ist für eine Zugentlastung zwischen den Gehäuseteilen zusätzlich eine mechanische Verbindung vorgesehen.

Ferner ist aus der DE-A-2 547 857 ein Filter bekannt, bei dem ein Wickelfiltereinsatz in einem Gehäuse angeordnet ist, das aus einem becherförmigen Gehäusetopf und einem zugeordneten Gehäusedeckel besteht. Hierbei werden mit einer einzigen, den Filtereinsatz ringförmig umspannenden Klebestelle sowohl die beiden Gehäuseteile miteinander verbunden als auch Schmutz- und Reinseite im Gehäuse voneinander getrennt. Eine zusätzliche Verankerung ergibt sich durch die Bördelung des Randes am Gehäusetopf. Von Nachteil bei diesem Filter ist, dass sich für diese Bauart nur Gehäuseteile aus Metall eignen und für die einzige Klebestelle ein Heissschmelzkleber vorgesehen ist. Diese Bauart eignet sich weniger für Kunststoff-Gehäuse, für die zudem auch Heissschmelzkleber schlecht geeignet sind.

*Vorteile der Erfindung*

Das erfindungsgemässe Filter zum Reinigen von Flüssigkeiten mit den kennzeichnenden Merkmalen des Hauptanspruchs hat demgegenüber den Vorteil, dass es bei einer Bauart mit Kunststoffgehäuse eine einfache und dichte Verklebung der Gehäuseteile und des als Wickelelement ausgebildeten Filtereinsatzes ermöglicht. Hierbei übernimmt die einzige Klebestelle zwei für das Filtermedium dicht auszugestaltende Verbindungen, nämlich einmal zwischen Schmutz- und Reinseite und zum anderen zwischen den beiden Gehäuseteilen nach aussen hin. Dabei lässt sich für die Klebestelle auch ein kalt aushärtender Klebstoff verwenden. Bei dieser Bauart lässt sich der Fluss des Klebstoffes und seine Dosierung gut beherrschen, da eine ringförmige Tasche mit Klebstoff gefüllt wird, der beim Eintauchen des Deckelrandes in die Tasche in einen Ringspalt gedrückt wird, der radial an die Mantelfläche des Wickelfilterelements herangeführt, so dass eine rationelle und billige Fertigung möglich ist. Werden mit dem Filter Benzin und Dieselkraftstoff gereinigt, so wird durch die besondere Ausbildung der Klebestelle die Gefahr erheblich verringert, dass unter der Einwirkung des Kraftstoffs der Klebstoff aufquillt und dadurch innere Spannungen in der Klebeverbindung entstehen und die Klebestelle abplatzt.

Durch die in den Unteransprüchen aufgeführten Massnahmen sind vorteilhafte Weiterbildungen und Verbesserungen des im Hauptanspruch angegebenen Filters möglich. Ferner ist gemäss Anspruch 6 ein vorteilhaftes Verfahren zur Herstellung des Filters angegeben.

*Zeichnung*

Zwei Ausführungsbeispiele der Erfindung sind in der Zeichnung dargestellt und in der nachfolgenden Beschreibung näher erläutert. Es zeigen:

Fig. 1 ein erstes Ausführungsbeispiel des Filters, in der linken Hälfte geschnitten und die rechte Hälfte als Draufsicht;

Fig. 2 zeigt einen Längsschnitt durch einen Teil eines zweiten Ausführungsbeispieles.

*Beschreibung der Ausführungsbeispiele*

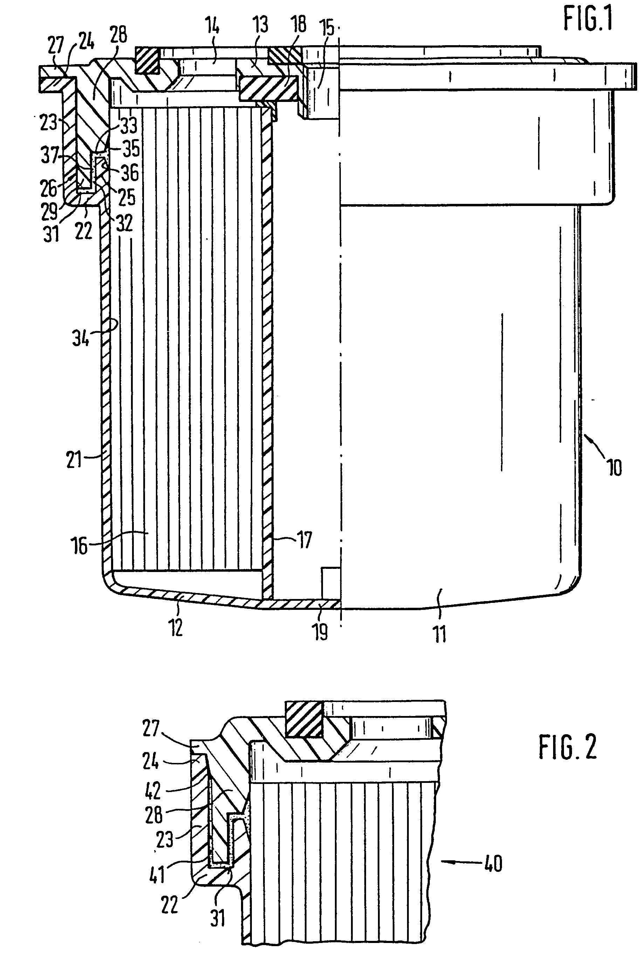

Die Fig. 1 zeigt ein Kraftstoff-Filter 10, teilweise im Schnitt, dessen Gehäuse 11 aus einem becherförmigen Gehäusetopf 12 und einem zugehörigen Gehäusedeckel 13 besteht. Beide Teile des Gehäuses 11 bestehen aus Kunststoff.

Im Gehäusedeckel 13 sind ringförmig mehrere Zulauf-Öffnungen 14 angeordnet, während in einem zentrischen Gewindestutzen eine Ablauf-Öffnung 15 ausgebildet ist. Zwischen die Zulauf- und Ablauf-Öffnungen 14, 15 ist im Innern des Gehäuses 11 ein Filtereinsatz 16 geschaltet, der als an sich bekanntes Wickelelement ausgebildet ist. Der Filtereinsatz 16 stützt sich mit einem Mittelrohr 17 an einem Flachdichtring 18 am Gehäusedeckel 13 sowie an einem Boden 19 des Gehäusetopfes 12 ab.

Der Gehäusetopf 12 hat ausgehend von seinem Boden 19 einen ersten zylindrischen Abschnitt 21, der über einen Absatz 22 in einen aufgeweiteten, zweiten zylindrischen Abschnitt 23 übergeht, der seinerseits in einem radialen Rand 24 ausläuft. Der erste zylindrische Abschnitt 21 ist über den Absatz 22 hinaus durch einen ringförmig umlaufenden Bund 25 verlängert, der zusammen mit dem Absatz 22 und dem aufgeweiteten, zweiten zylindrischen Abschnitt 23 eine Tasche 26 bildet, die ebenfalls ringförmig umläuft. Die Höhe der Tasche 26 ist dabei so gross gewählt, dass sie wenigstens die doppelte Wandstärke des Gehäusetopfes 12 in diesem Bereich ausmacht.

Auf den Gehäusetopf 12 ist der Gehäusedeckel 13 so aufgesetzt, dass er mit seinem äusseren Rand 27 auf Anschlag am Rand 24 des Gehäusetopfes 12 liegt. Ferner weist der Gehäusedeckel 13 einen axial verlaufenden, ringförmigen Kragen 28 auf, mit dem der Gehäusedeckel 13 im aufgeweiteten zylindrischen Abschnitt 23 zentriert ist. Der Kragen 28 taucht mit einem ringförmig umlaufenden, leistenförmigen Vorsprung 29 in die Tasche 26 hinein und bildet dadurch einen im Querschnitt gesehen im wesentlichen Z-förmigen Ringspalt 31. Dieser Ringspalt 31 hat einen konzentrisch zur Längsachse des Filters 10 verlaufenden axialen Abschnitt 32, der über einen radialen Abschnitt 33 an die Mantelfläche 34 des Filtereinsatzes 16 heranführt. Am Kragen 28 und am Bund 25 ist jeweils eine umlaufende Abschrägung 35 bzw. 36 vorgesehen, so dass der radiale Abschnitt 33 des Ringspaltes 31 zum Filtereinsatz 16 hin kegelförmig aufgeweitet wird. Der Innendurchmesser des Kragens 28 in seinem nicht abgesetzten Bereich ist genauso gross ausgeführt wie der Innendurchmesser des Gehäusetopfes 12 im Bereich des ersten zylindrischen Abschnitts 21, so dass an beiden Teilen 12 und 13 der Filtereinsatz 16 mit seiner Mantelfläche 34 anliegt.

Der Ringspalt 31, der von beiden Gehäuseteilen 12, 13 und vom Filtereinsatz 16 begrenzt wird, ist mit einem Klebstoff 37 gefüllt. Dabei wird hier ein kalt aushärtender Klebstoff verwendet, der nach dem Aushärten sowohl die beiden Gehäuseteile 12, 13 miteinander und zugleich auch mit dem Filtereinsatz 16 dicht und fest verbindet.

Zur Herstellung des Kraftstoff-Filters 10 wird der Filtereinsatz 16 in den ersten zylindrischen Abschnitt 21 des Gehäusetopfes 12 eingeschoben. Danach wird in die nach oben hin offene Tasche 26 ein kalt aushärtender Klebstoff eingebracht. Der Fluss des Klebstoffes und seine Dosierung lassen sich dabei leicht steuern. Anschliessend wird der Gehäusedeckel 13 in den Gehäusetopf 12 eingesetzt und angepresst, bis die Ränder 24, 27 aneinanderliegen. Beim Anpressen des Gehäusedeckels 13 taucht der ringförmige Vorsprung 29 am Kragen 28 in die Tasche 31 und verdrängt dabei Klebstoff in den angebotenen Ringspalt 31, wobei er auch nach innen zum Filterelement 16 hin fliesst. Der erstarrende Klebstoff im Ringspalt 31 bildet anschliessend eine feste und dichte Verankerung der beiden Gehäuseteile 12, 13 und des Wickelelements 16. Durch die besondere Kammerung des Klebstoffes im Ringspalt 31 kann der zu filtrierende, aggressive Kraftstoff den Klebstoff 37 nur in einem begrenzten Bereich angreifen, so dass dessen Quellen sowie damit verbundene innere Spannungen in der Klebeverbindung weitgehend vermieden werden.

Zur Erhöhung der Druckfestigkeit können die beiden Ränder 24 und 27 der aus Kunststoff bestehenden Gehäuseteile 12 und 13 miteinander verschweisst werden.

Das aufgezeigte Filter 10 ermöglicht somit eine Bauart mit einem Kunststoff-Gehäuse 11, bei dem die Klebestelle zwischen den Gehäuseteilen 12, 13 und dem Filterelement 16 in besonders einfacher und rationeller Weise herstellbar ist; so wird bei dieser Bauart die Klebestelle den Anforderungen an das Kraftstoff-Filter 10 im Betrieb gerecht.

Die Fig. 2 zeigt einen Teil eines zweiten Filters 40, das sich von demjenigen nach Fig. 1 wie folgt unterscheidet, wobei für gleiche Bauelemente gleiche Bezugszeichen verwendet werden. Das Filter 40 unterscheidet sich von demjenigen nach Fig. 1 vor allem dadurch, dass der Z-förmige Ringspalt 31 verlängert ist durch einen zweiten, axialen Abschnitt 41. Dieser ringförmig verlaufende, zweite axiale Abschnitt 41 erstreckt sich vom Absatz 22 über die Tasche 26 hinaus nach oben bis zu einem konischen Abschnitt 42, der den Gehäusedeckel 13 weiterhin im Gehäusetopf 12 zentriert. Die beiden Gehäuseteile 12, 13 sind durch den im zweiten axialen Abschnitt 41 erstarrenden Klebstoff so fest miteinander verbunden, dass eine zusätzliche Schweissverbindung an den Rändern 24, 27 entfallen kann. Diese Ränder 24, 27 übernehmen somit nur noch die Anschlagsfunktion.

Selbstverständlich sind an den gezeigten Ausführungsformen Änderungen möglich, ohne vom Gedanken der Erfindung abzuweichen. So kann auch die Form von Tasche 26 und Kragen 28 abgeändert werden, ohne auf die vorteilhafte radiale Heranführung des Klebstoffes an das Wickelelement 16 verzichten zu müssen. Anstelle der aufgezeigten Durchströmung kann das Filter 10 auch in umgekehrter Weise durchströmt werden. Obwohl bei dieser Bauart das Wickel-Filterelement besonders vorteilhaft ist, können auch andere Filterelemente verwendet werden, soweit sie die Kammerung des Klebstoffes im Ringspalt ermöglichen.

**Patentansprüche**

1. Filter (10) zum Reinigen von Flüssigkeiten, insbesondere von Brennstoff und Öl, mit einem aus zwei Teilen (12, 13) aus Kunststoff bestehenden Gehäuse, das in seinem Innern einen Filtereinsatz (16) aufnimmt und dessen eines Teil als becherförmiger Gehäusetopf (12) und dessen anderes Teil als Gehäusedeckel (13) ausgebildet ist, und mit einer an den Filtereinsatz (16) grenzenden, ringförmigen Klebestelle (37), die sowohl Schmutz- und Reinseite voneinander trennt als auch beide Teile (12, 13) miteinander verbindet, und bei dem die beiden Teile im Bereich der Klebestelle (37) eine durch ringförmig angeordnete Rippen im einen Teil gebildete, zum anderen Teil hin offene, ringförmige Nut aufweisen, in die das andere Teil mit einem dazu angepassten Kragen (28) ragt, der die Nut teilweise ausfüllt und dabei einen mit Klebstoff gefüllten Ringspalt (31) bildet, dadurch gekennzeichnet, dass der Filtereinsatz ein Wickelfilterelement (16) ist und die Nut im becherförmigen Gehäusetopf (12) und der Kragen (28) im Gehäusedeckel (13) ausgebildet sind, dass beide Teile (12, 13) im Bereich der Klebestelle (37) an der Mantelfläche (34) des Wickelfilterelements (16) anliegen und zusammen mit der Mantelfläche (34) den Ringspalt (31) begrenzen, der radial an die Mantelfläche (34) herangeführt ist und dass die Rippen zu einem ununterbrochen umlaufenden Bund (25) geformt sind, die aus der ringförmigen Nut eine zum Gehäusedeckel (13) hin offene Tasche (26) bilden.

2. Filter nach Anspruch 1, dadurch gekennzeichnet, dass der Ringspalt (31) mindestens einen in der Tasche (26) verlaufenden, axialen Abschnitt (32) aufweist, der an den radial verlaufenden, an die Mantelfläche (34) heranführenden Abschnitt (33) anschliesst.

3. Filter nach Anspruch 1 oder 2, dadurch gekennzeichnet, dass der Kragen (28) und/oder der Bund (25) jeweils eine dem Ringspalt (31) zugeordnete Anschrägung (35, 36) aufweisen, so dass der Ringspalt (31) zur Mantelfläche (34) hin aufgeweitet ist.

4. Filter nach einem der Ansprüche 1 bis 3, dadurch gekennzeichnet, dass die beiden Teile (12, 13) an ihren Rändern (24, 27) im Abstand von der Klebestelle (37) miteinander verschweisst sind.

5. Filter nach einem der Ansprüche 1 bis 4, dadurch gekennzeichnet, dass der mit Klebstoff gefüllte Ringspalt (31) im Längsschnitt gesehen zwei zueinander und zur Längsachse konzentrisch verlaufende axiale Abschnitte (32, 41) aufweist, die insbesondere miteinander in Verbindung stehen.

6. Verfahren zum Herstellen eines Filters nach einem der Ansprüche 1 bis 5, dadurch gekennzeichnet, dass in das eine becherförmige Gehäuseteil (12) nach oder vor dem Einbau des Wickelfilterelements (16) die nach oben offene Tasche (26) zumindest teilweise mit fliessfähigem Klebstoff gefüllt wird und danach das andere Gehäuseteil (13) aufgesteckt wird, wobei der in die Tasche eindringende Kragen (28) Klebstoff aus der Tasche (26) verdrängt und radial zum Wickeleinsatz (16) in den von beiden Gehäuseteilen (12, 13) mit dem Wickeleinsatz (16) gebildeten Ringspalt (31) drückt.

### Claims

1. Filter (10) for the purification of liquids, in particular fuel and oil, having a housing consisting of two plastic parts (12, 13) which accommodates a filter insert (16) in its interior and one part of which is constructed as a beaker-type housing container (12) and the other part of which is constructed as a housing lid (13), and having an annular adhesive joint (37) which adjoins the filter insert (16) and which both separates the dirty and clean sides from each other and also joins both parts (12, 13) to each other, and in which housing the two parts in the region of the adhesive joint (37) have an annular groove formed by annularly formed ribs in one part and open in the direction of the other part into which a collar (28) adapted thereto fits therein and which partially fills the groove and in doing so, forms an annular gap (31) filled with adhesive, characterized in that the filter insert is a wound filter element (16) and the groove is formed in the beaker-type housing container (12) and the collar (28) on the housing lid (13), so that both parts (12, 13) are up against the lateral surface (34) of the wound filter element (16) in the region of the adhesive joint (37) and together with the lateral surface (34) form the boundary of the annular gap (31) which is led radially to the lateral surface (34), and wherein the ribs are formed into an uninterrupted circumferential ridge (25) and which form a pocket (26) which is open toward the housing lid (13) out of the annular groove.

2. Filter according to Claim 1, characterized in that the annular gap (31) has at least one axial section (32) which extends in the pocket (26) and which adjoints the section (33) which extends radially and leads to the lateral surface (34).

3. Filter according to Claim 1 or 2, characterized in that the collar (28) and/or the ridge (25) have in each case a chamfer (35, 36) associated with the annular gap (31) so that the annular gap (31) is enlarged in the direction of the lateral surface (34).

4. Filter according to one of the Claims 1 to 3, characterized in that the two parts (12, 13) are welded to each other at their edges (24, 27) at a distance from the adhesive joint (37).

5. Filter according to one of the Claims 1 to 4, characterized in that the annular gap (31) filled with adhesive, when viewed in longitudinal section, has two axial sections (32, 41), extending concentrically to each other and to the longitudinal axis, which are in communication, in particular with each other.

6. Method for producing a filter according to one of the Claims 1 to 5, characterized in that the upwardly open pocket (26) is at least partially filled with flowable adhesive after or before the fitting of the wound filter element (16) in the one breaker-type housing part (12) and then the other housing part (12) is inserted, in which process the collar (28) penetrating the pocket displaces adhesive out of the pocket (26) and forces it radially towards the wound insert (16) into the annular gap (31) formed by both housing parts (12, 13) with the wound insert (16).

### Revendications

1. Filtre (10) pour épurer des liquides, en particulier du carburant ou de l'huile, comportant un carter en matière plastique constitué de deux pièces (12, 13), qui reçoit intérieurement une cartouche filtrante (16), et l'une des parties étant réalisées sous la forme d'une cuve du carter (12) en forme de bécher, et l'autre partie (13) sous la forme d'un couvercle de carter, et comportant aussi un emplacement de collage (37), annulaire, limitant la cartouche filtrante (16) et qui sépare aussi bien le côté souillure et le côté matière pure l'un de l'autre qu'il relie ensemble les deux parties (12, 13), et dans lequel les deux parties présentent, dans la zone de l'emplacement de collage (37), une gorge annulaire, ouverte vers l'autre partie, formée dans une partie par une nervure disposée en anneau, dans laquelle s'engage l'autre partie par un col (28) adapté à cet effet, qui remplit partiellement la gorge, et forme ainsi une fente annulaire (31) qui sera remplie d'adhésif, filtre caractérisé en ce que la cartouche filtrante est un élément filtrant enroulé (16), la gorge étant réalisée sur la cuve (12) en forme de bécher, et le col (28) sur le couvercle (13) du carter, que les deux parties (12, 13) s'appliquent, dans la zone de l'emplacement de collage (37) sur la surface enveloppante (34) de l'élément filtrant (16) enroulé et limitent, en commun avec la surface enveloppante (34) la fente annulaire (31) qui arrive radialement jusqu'à la surface enveloppante (34), et que les nervures sont façonnées en un collet (25) circulaire ininterrompu qui forme à partir de la gorge annulaire une poche (26) ouverte jusqu'au couvercle de carter (13).

2. Filtre suivant la revendication 1, caractérisé en ce que la fente annulaire (31) comporte au moins une section (32), axiale s'étendant dans la poche (26) qui se raccorde à la section (33) qui s'étend radialement, conduisant à la surface enveloppante (34).

3. Filtre suivant l'une des revendications 1 et 2, caractérisé en ce que le col (28) et/ou le collet (25) présentent chaque fois un chanfrein (35, 36) associé à la fente annulaire (31), de sorte que la fente annulaire (31) est élargie par rapport à la surface enveloppante (34).

4. Filtre suivant l'une des revendications 1 à 3, caractérisé en ce que l'on soude ensemble les deux parties (12, 13), par leurs bords (23, 24), à une certaine distance de l'emplacement de collage (37).

5. Filtre suivant l'une des revendications 1 à 4, caractérisé en ce que la fente annulaire (31), remplie d'adhésif, présente, si on la regarde en coupe longitudinale, deux sections (31, 41) axiales qui s'étendent concentriquement l'un par rapport à l'autre et par rapport à l'axe longitudinal, qui en particulier communiquent l'une avec l'autre.

6. Procédé pour la fabrication d'un filtre suivant l'une des revendications 1 à 5, caractérisé en ce que, dans la partie (12) du carter en forme de bécher, avant ou après l'insertion de l'élément filtrante (16) enroulé, la poche (26), ouverte vers le haut, est remplie, au moins partiellement, d'un adhésif fluide et que l'on applique ensuite l'autre partie (13) du carter, pendant que le col (28) pénétrant dans la poche (26), en repousse l'adhésif, et le serre, radialement par rapport à la cartouche filtrante (16) enroulée, dans la fente annulaire (31), formée par les deux parties (12, 13) du carter avec cette cartouche (16) enroulée.

FIG.1

FIG. 2